# EUROPEAN PATENT APPLICATION

(11) **EP 2 434 167 A1**
(43) Date of publication of application: **28.03.2012**
(21) Application number: 11182424.9
(22) Date of filing: 22.09.2011
(51) Int. Cl.: F16B 12/52, F16B 12/50, A47B 13/06, F16B 7/02

(54) **Connection joint for tubular elements of a modular structure and relative assembly method**

(30) Priority: 24.09.2010 IT UD20100172
(71) Applicant: Sinetica Industries Srl, 31046 Oderzo (TV) (IT)
(72) Inventor: Vizzotto, Giampaolo, 31046 Oderzo (TV) (IT)
(74) Representative: Petraz, Gilberto Luigi

(57) **Abstract**

Joint (10) and method for connecting two tubular elements (12, 14) of a modular structure (16), in which a first tubular element (12) cooperates by means of a head surface with a lateral wall (33) of a second tubular element (14). The joint (10) comprises:
- a first body (31) provided with a first attachment surface (32) which cooperates, during use, with a relative internal surface of the first tubular element (12), with relative attachment apertures (38) into which relative clamping screws are inserted which clamp the first body (31) to the second tubular element (14), and with a first guide edge (35) inclined with respect to a plane on which the first attachment surface (32) lies;
- a second body (61), independent from the first body (31) and attachable to the latter by means of relative attachment fins (67) and provided with a relative second attachment surface (62) opposite the first attachment surface (32) so as to cooperate, during use, with a relative internal surface of the first tubular element (12), and with a relative second guide edge (65) inclined in coordination with the first guide edge (35) so as to cooperate with the first guide edge (35) in order to condition the reciprocal movement of the two bodies (31, 61) both in a first direction substantially orthogonal to the plane on which the first attachment surface (32) lies, and also in a direction substantially parallel to the lying plane; and
- expansion means (44) disposed in cooperation both with the first body (31) and also with the second body (61), and able to be activated so as to reciprocally distance the first body (31) and the second body (61), thrusting the attachment surfaces (32, 62) against the relative internal surfaces of the first tubular element (12).

## Description

### FIELD OF THE INVENTION

The present invention concerns a joint and the relative method of assembly to connect to each other the tubular elements of a modular structure, such as for example a structural frame of a piece of furniture, a desk, a table, a shelf or suchlike. In particular, the joint according to the present invention allows to join two cross-pieces of the modular structure, where one is assembled substantially orthogonal to the other, for example, to support a support plane for the piece of furniture.

### BACKGROUND OF THE INVENTION

In the furnishing field, for example that of modular tables, the problem is known of connecting two or more tubular elements to each other, for example a longitudinal cross-piece on which a support plane is attached, and a lateral cross-piece which is supported by two uprights, normally the legs of the table, or other suitable support element, or of connecting a longitudinal cross-piece directly to the legs of the table.

One known solution to this problem provides to weld the two cross-pieces together, but this has the disadvantage that it considerably limits the modularity of the table and increases its bulk in its dismantled condition.

Another known solution provides to make through holes on the internal and external walls of the lateral cross-piece and to use a bushing associated with the head of the longitudinal cross-piece.

Threaded seatings are made on the bushing, in which screws are screwed, inserted into the through holes and cooperating with the external wall, so as to clamp the bushing to the lateral cross-piece.

However, this known solution entails an unpleasant aesthetic effect, since one part of the screws, normally the head, is visible.

Another known solution provides to make holes on the internal wall of the lateral cross-piece and subsequently to insert threaded bushings. A metal plate is then welded to the head of the longitudinal cross-piece and holed with the same holing pitch used for the bushings. Suitable screws connect the longitudinal and lateral cross-pieces.

Like the previous solution, this one too entails an unpleasant aesthetic effect caused by the visible head of the screw and the metal plate welded to the longitudinal cross-piece.

Solutions are also known with retractable joints, disposed inside the end of ona of the two tubular elements and attached to the other tubular element. These known joints are provided with an expansion portion able to be activated to clamp themselves to the relative tubular element, thus clamping the first tubular element to the second tubular element. This known solution is quick and simple to assemble and completely retracted inside the relative tubular elements.

A retracted solution is also known, from FR 2.851.321, on which the preamble to the main claim is based, with two bodies that slide one with respect to the other at the moment of assembly.

Purpose of the present invention is to obtain a joint, and to perfect a method, that allow to connect tubular elements for modular furniture with each other, such as a table, a desk or suchlike, in which the assembly elements are completely retracted inside the relative tubular elements, and in which a solid anchorage is guaranteed, without play between the lateral tubular element and the longitudinal tubular element, substantially in any condition of assembly.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a joint according to the present invention is used to connect two tubular elements of a modular structure with each other.

In particular, the joint according to the present invention is applied in a coupling of the type where a first tubular element cooperates by means of a head surface with a lateral wall of a second tubular element.

According to the present invention, the joint comprises at least:
- a first shaped body provided with at least a first attachment surface able to cooperate, during use, with a relative internal surface of the first tubular element, and with relative attachment apertures into which relative clamping screws are able to be inserted, able to clamp the first shaped body to the second tubular element, by screwing the clamping screws into a corresponding threaded hole made on the lateral wall of the second tubular element;
- a second body, independent from the first body and attachable to the latter by means of relative snap-in attachment fins and provided with a relative second attachment surface opposite the first attachment surface of the first body and able to cooperate, during use, with a relative internal surface of the first tubular element; and
- expansion means disposed in cooperation both with the first body and also with the second body, and able to be activated so as to reciprocally distance the first body and the second body, thrusting the two attachment surfaces against the relative internal surfaces of the first tubular element, until it determines the clamping of the two bodies to the first tubular element, thus clamping the first tubular element to the second tubular element.

According to a characteristic feature of the present invention, the first body comprises at least a first guide edge inclined with respect to a plane on which the relative first attachment surface lies, and the second body comprises at least a relative second guide edge inclined in coordination with the first guide edge of the first body.

Thanks to this coordinated inclination of the two guide edges, the action of reciprocal distancing defined by the expansion means develops both in a first direction substantially orthogonal to the plane on which the first attachment surface of the first body lies, and also in a direction substantially parallel to said lying plane.

In this way, the expansion of the joint inside the first tubular element substantially simulates a condition of conical coupling between the attachment surfaces and the relative internal surfaces of the first tubular element, thus guaranteeing the maximum capacity of mechanical attachment due to interference between the parts.

With the present invention we therefore have the possibility of exploiting to the maximum the aesthetic and economic characteristics of expansion joints, guaranteeing in any case a solid anchorage without any play between the lateral and longitudinal tubular elements, substantially in any condition of assembly.

According to a variant the first attachment surface of the first body and the second attachment surface of the second body are substantially parallel to each other.

According to another variant, the first guide edge of the first element has an inclination with respect to the plane on which the first attachment surface lies in the range of some tens of degrees. For example the inclination is comprised between about 30° and about 60°, advantageously between about 40° and about 50°.

According to another variant, the first guide edge of the first body comprises a protruding lip facing toward the center of the first body and is able to cooperate with the attachment fins of the second body, so as to determine the snap-in attachment of the two bodies.

According to another variant, the attachment fins have an inclination coordinated with the first guide edge of the first body to define, in determinate extreme conditions of expansion, the desired action of reciprocal distancing in the two directions, orthogonal and parallel to the plane on which the first attachment surface of the first body lies.

According to another variant, the first body comprises at least a first positioning edge inclined with respect to the plane on which the first attachment surface lies. In this variant, the second body comprises a second positioning edge inclined in coordination with the first positioning edge of the first body.

In this way, before the expansion means are activated, the second body slides with respect to the first with its second positioning edge along the first positioning edge, reducing the overall height of the joint defined by the two coupled bodies.

With this variant solution, the insertion conditions of the two bodies inside the first tubular element are facilitated, during the assembly of the modular structure.

Advantageously, the first positioning edge has a reduced inclination with respect to the inclination defined by the first guide edge.

According to a variant, the positioning edge has an inclination with respect to the plane on which the first attachment surface lies in the range of a few degrees. For example, said inclination is comprised between about 3° and about 9°, advantageously between about 5° and about 7°.

According to another variant, the first body comprises a through hole, threaded and facing substantially orthogonal to the plane on which the first surface lies, the expansion means comprise a grub screw or worm, screwed inside the threaded through hole of the first body, and the second body comprises a thrust surface inclined substantially orthogonal to the first guide edge and on which one end of the grub screw presses, during the action of reciprocal distancing of the two bodies.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view from below of a modular furniture element to which are applied four joints according to the present invention;
- fig. 2 is an enlarged three-dimensional view of one of the joints in fig. 1;
- fig. 3 is an enlarged and exploded three-dimensional view of one of the joints in fig. 1;
- fig. 4 is a lateral view of fig. 3;
- fig. 5 shows a first assembly step of the joint in fig. 2;
- fig. 6 shows a second assembly step of the joint in fg. 2;
- fig. 7 shows a third assembly step of the joint in fig. 2;
- fig. 8 shows a fourth assembly step of the joint in fig. 2.

To facilitate comprehension, the same reference numbers have been used, where possible, to identify identical common elements in the drawings.

### DETAILED DESCRIPTION OF A PREFERENTIAL FORM OF EMBODIMENT

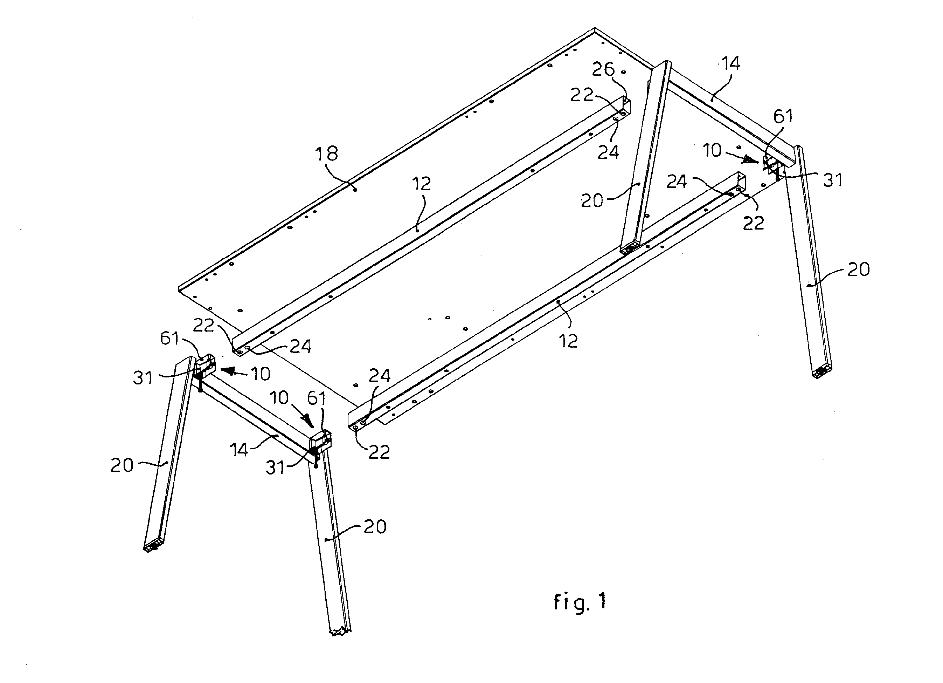

With reference to fig. 1, a connection joint 10 according to the present invention is used to connect to each other a longitudinal cross-piece 12 and a lateral cross-piece 14 of the frame of a piece of furniture which, in the case shown here, is a table 16.

Both the longitudinal cross-piece 12 and the lateral cross-piece 14 are made from tubular sections, that is, provided with a longitudinal through cavity.

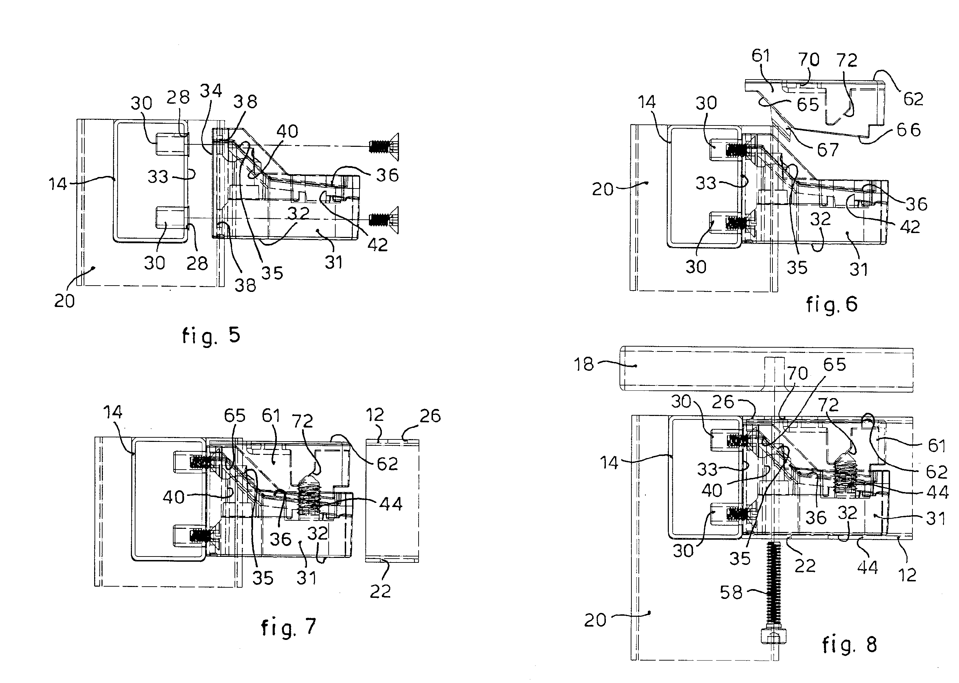

A support plane 18 (figs. 1 and 8) for the table 16 is attachable to the upper part of the longitudinal cross-piece 12, which in this case has a rectangular cross section, whereas the lateral cross-piece 14, which also has a rectangular cross section, is constrained to two uprights 20, which may be the legs or other support elements of the table 1 b.

It is not excluded that the joint 10 according to the present invention may also be effectively applied to modular structures in which the longitudinal cross-piece 12, the lateral cross-piece 14 and possible other structural elements to which the joint 10 is associated, have different cross sections other than rectangular, for example triangular, circular, ovoid or others.

On the lower wall of the longitudinal cross-piece 12 two lower through holes are made, respectively first 22 and second 24, and on the upper wall a third upper through hole 26 is made, coaxial with the first lower through hole 22.

On a lateral wall 33 of the lateral cross-piece 14, facing toward the inside of the table 16, two holes 28 are made, in which relative bushings 30 are disposed.

The joint 10 comprises a first body 31, having a substantially flat attachment surface 32 and able to cooperate with an internal surface of an end segment of the longitudinal cross-piece 12, and a substantially flat abutment face 34, able to face the lateral wall 33 of the lateral cross-piece 14.

The first body 31 also comprises two first through attachment holes 38, having a longitudinal axis substantially orthogonal to the abutment face 34, and a second through hole 40 substantially orthogonal to the first holes 38 and able to be disposed substantially vertical.

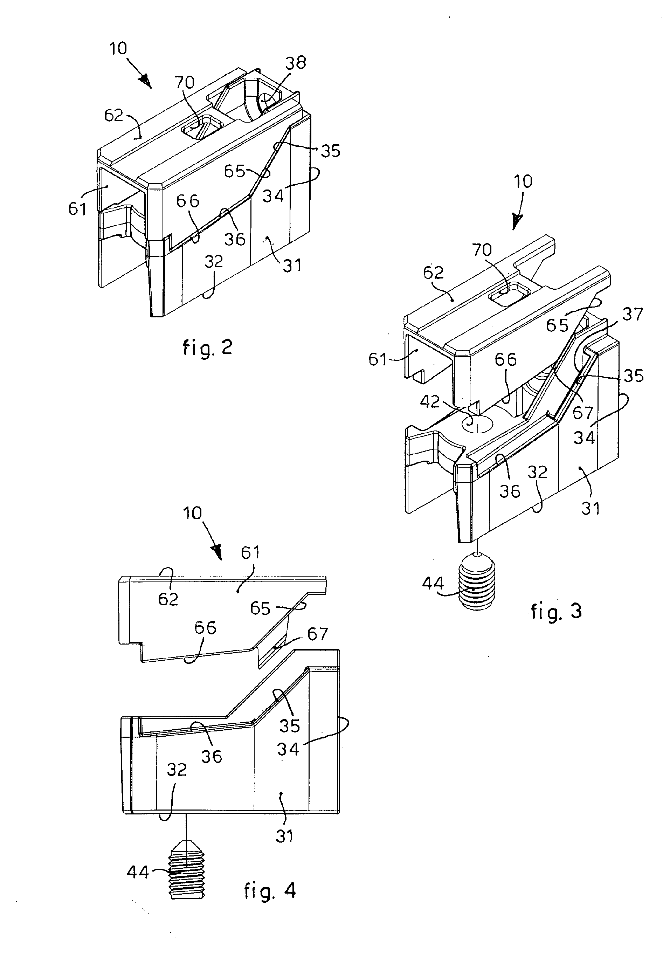

The first body 31 also comprises a threaded seating 42, which has a longitudinal axis substantially parallel to the longitudinal axis of the second through hole 40, and inside which an attachment grub screw 44 is able to be screwed (figs. 3, 4, 7 and 8).

The first body 31 also comprises two guide edges 35 inclined by about 45° with respect to a plane on which the attachment surface 32 lies, and along each of which a lip 37 is made, the functions of which will be described in detail hereafter, protruding toward the inside of the first body 3 1.

The first body 31 also comprises two positioning edges 36, inclined by about 6° with respect to the plane on which the attachment surface 32 lies, and made following and continuous with respect to the two guide edges 35.

The joint 10 also comprises a second body 61 having a substantially flat attachment surface 62, disposed during use substantially parallel to the attachment surface 32 of the first body 31 and able to cooperate with an internal surface of an end segment of the longitudinal cross-piece 12.

The second body 61 also comprises a through hole 70 made so as to be disposed substantially coaxial to the second through hole 40 of the first body 31.

In this way, through the through hole 40 and the through hole 70, an attachment screw 58 is inserted, by means of which the support plane 18 of the table 16 is attached to the joint 10, and therefore to the two cross-piece 12 and 14.

The second body also comprises a thrust surface 72, which has an inclination substantially orthogonal to that of the guide edge 35 of the first body 31 and on which a terminal part 44a of the attachment grub screw 44 presses, in order to determine, during use, the distancing of the second body 61 from the first body 31.

The second body 61 also comprises two guide edges 65 inclined in coordination with the guide edges 35 of the first body 31. On each of the guide edges 65 a relative attachment fin 67 is made, conformed so as to cooperate in snap-in manner with the lips 37 of the guide edges 35 of the first body 31, so as to determine the snap-in attachment of the first body 31 and the second body 61.

In this case, the attachment fins 67 have an inclination coordinated with that of the lips 37 and hence of the guide edges 35, so as to function also as a guide element in the movement of the second body 61 with respect to the first body 31, in particular in extreme conditions of expansion.

With the solution according to the present invention as described heretofore, when the grub screw 44 is screwed into the threaded seating 42, its end part 44a thrusts against the thrust surface 72 so as to determine a lifting of the second body 61 with respect to the first body 31.

The cooperation between the guide edges 35 and 65, or between the attachment fins 67 and the lips 37, determines a combined movement of the second body 61 both in a direction substantially orthogonal to the plane on which the attachment surface 32 of the first body 31 lies, and also in a direction substantially parallel to said plane.

In this way, the attachment surface 62 of the second body 61 thrusts in an inclined manner against the relative internal surface of the longitudinal cross-piece 12, guaranteeing an optimum attachment condition between the parts.

The second body 61 also comprises two positioning edges 66, inclined in coordination with the positioning edges 36 of the first body 31, and made following and continuous with respect to the two guide edges 65.

The cooperation between the two positioning edges 36 and 66 determines, in a non-expanded condition, a sliding of the second body 61 with respect to the first body 31, so as to reduce the overall height of the joint 10 and promote its insertion inside the longitudinal cross-piece 12.

It is clear that modifications and/or additions of parts may be made to the joint 10 as described heretofore, without departing from the field and scope of the present invention.

It is also clear that, although the present invention has been described with reference to some specific examples, a person of skill in the art shall certainly be able to achieve many other equivalent forms of connection joint for tubular elements in a modular structure and relative assembly method, having the characteristics as set forth in the claims and hence all coming within the field of protection defined thereby.

## Claims

1. Connection joint for two tubular elements (12, 14) of a modular structure (16), in which a first tubular element (12) cooperates by means of a head surface with a lateral wall (33) of a second tubular element (14), **characterized in that** it comprises at least:
- a first body (31) provided with at least a first attachment surface (32) able to cooperate, during use, with a relative internal surface of said first tubular element (12), with at least one relative attachment aperture (38) in which a relative clamping screw is able to be inserted in order to clamp said first body (31) to said second tubular element (14), and with at least a first guide edge (35) inclined with respect to a plane on which said first attachment surface (32) lies, and equipped with an attachment lip (37);
- a second body (61), independent from said first body (31) and attachable to the latter by means of at least one relative attachment fin (67) able to cooperate, during use, with a relative attachment lip (37) and provided with a relative second attachment surface (62) opposite said first attachment surface (32) and able to cooperate, during use, with a relative internal surface of said first tubular element (12), and with at least a relative second guide edge (65) inclined in coordination with said first guide edge (35) and able to cooperate with said first guide edge (35) so as to condition the reciprocal movement of the two bodies (31, 61) both in a first direction substantially orthogonal to the plane on which said first attachment surface (32) lies, and also in a direction substantially parallel to said lying plane; and
- expansion means (44) disposed in cooperation both with said first body (31) and also with said second body (61), and able to be activated so as to reciprocally distance said first body (31) and said second body (61), thrusting said attachment surfaces (32, 62) against the relative internal surfaces of said first tubular element (12),
- wherein said second body (61) also comprises a thrust surface (72), having an inclination substantially orthogonal to that of said guide edge (35) and on which a terminal part (44a) of said expansion means (44) presses, so as to determine, during use, the distancing of said second body (61) from said first body (31).

2. Joint as in claim 1, **characterized in that** the first attachment surface (32) and the second attachment surface (62) are substantially parallel each other.

3. Joint as in claim 1 or 2, **characterized in that** the first guide edge (35) has an inclination with respect to the plane on which the first attachment surface (32) lies in the range of tens af degrees.

4. Joint as in claim 3, **characterized in that** the inclination of the first guide edge (35) is comprised between about 30° and about 60°, advantageously between about 40° and about 50°.

5. Joint as in any claim hereinbefore, **characterized in that** the attachment fins (67) have an inclination coordinated with the first guide edge (35) so as to define, in determinate extreme expansion conditions, the desired action of reciprocal distancing in the two directions, orthagonal and parallel to the plane on which the first attachment surface (32) lies.

6. Joint as in any claim hereinbefore, **characterized in that** the first body (31) comprises at least a first positioning edge (36) inclined with respect to the plane on which the first attachment surface (32) lies, and the second body (61) comprises a second positioning edge (66) inclined in coordination with said first positioning edge (36).

7. Joint as in claim 6, **characterized in that** the first positioning edge (36) has a reduced inclination with respect to the inclination defined by the first guide edge (35).

8. Joint as in claim 6 or 7, **characterized in that** the first positioning edge (36) has an inclination with respect to the plane on which the first attachment surface (32) lies in the range of a few degrees.

9. Joint as in claim 8, **characterized in that** the inclination of the first positioning edge (36) is comprised between about 3° and about 9°, advantageously between about 5° and about 7°.

10. Joint as in any claim hereinbefore, **characterized in that** the first body (31) comprises a threaded through hole (42) facing substantially orthogonal to the plane on which the first surface (32) lies, and the expansion means comprise a grub screw (44) able to be screwed inside said threaded through hole (42), and the second body (61) comprises a thrust surface (72) inclined substantially orthogonal to the first guide edge (35) and on which an end (44a) of said grub screw (44) presses, during the action of reciprocal distancing of the two bodies (31, 61).

11. Method to connect two tubular elements (12, 14) of a modular structure (16) by means of a connection joint, in which a first tubular element (12) cooperates by means of a head surface with a lateral wall (33) of a second tubular element (14), **characterized in that** it comprises at least the following steps:
- a first step in which a first body (31) of said joint (10) is clamped to said lateral wall (33) of said second tubular element (14);
- a second step in which a second body (61) is attached to said first body (31) by means of relative attachment fins (67);
- a third step in which said first body (31) and said second body (61) are at least partly inserted inside said first tubular element (12) in correspondence with said head surface, so that relative attachment surfaces (32, 62) of the two bodies (31, 61) arc disposed in cooperation with relative internal surfaces of said first tubular element (12); and
- a fourth step in which expansion means (44) are disposed in cooperation both with said first body (31) and also with said second body (61), and are activated so as to reciprocally distance said first body (31) and said second body (61), thrusting said attachment surfaces (32, 62) against the relative internal surfaces of said first tubular element (12).

12. Method as in claim 11, **characterized in that** it also comprises a fifth step, in which a support plane (18) of said modular structure (16) is attached to said joint (10), inserting at least an attachment screw (58) in a first hole (22) and in a second hole (26), said holes (22, 26) being coaxial and made on said first tubular element (12).
